# EUROPEAN PATENT SPECIFICATION

(11) **EP 3 464 478 B1**
(45) Date of publication and mention of the grant of the patent: **09.12.2020**
(21) Application number: 17729581.3
(22) Date of filing: 16.05.2017
(51) Int. Cl.: C09D 5/00

(54) **PACKAGING COATED WITH AN EMULSION POLYMERIZED LATEX POLYMER**
MIT EINEM EMULSIONSPOLYMERISIERTEN LATEXPOLYMER BESCHICHTETE VERPACKUNG
EMBALLAGE REVÊTU D'UN POLYMÈRE DE LATEX POLYMÉRISÉ EN ÉMULSION

(30) Priority: 26.05.2016 US 201662341745 P
(43) Date of publication of application: 10.04.2019
(73) Proprietor: PPG Industries Ohio, Inc., Cleveland, OH 44111 (US)
(72) Inventor: GAO, Letian, Mason, Ohio 45040 (US); LI, Qin, Mason, Ohio 45040 (US); BAO, Hanzhen, Mason, Ohio 45040 (US)
(74) Representative: f & e patent
(86) International application number: PCT/US2017/032846
(87) International publication number: WO 2017/205110

(56) References cited:
- WO-A1-2005/059208
- WO-A1-2006/045017
- WO-A1-2015/002958
- WO-A1-2016/105502

## Description

### FIELD OF THE INVENTION

The present invention relates to a package coated at least in part with a coating comprising an emulsion polymerized latex polymer.

### BACKGROUND OF THE INVENTION

The application of various polymeric coatings to metallic substrates, including metal food and beverage containers, to retard or inhibit corrosion is well established. Coatings are applied to the interior of such containers to prevent the contents from contacting the metal of the container. Contact between the metal and the food or beverage can lead to corrosion of the metal container, which can then contaminate the food or beverage. This is particularly true when the contents of the container are acidic in nature, such as tomato-based products and soft drinks.

Certain coatings, particularly in the packaging industry, must undergo extreme stresses in the course of preparation and use of the packaging containers. In addition to flexibility, packaging coatings may also need resistance to chemicals, solvents, and pasteurization processes used in the packaging of beer and other beverages, and may also need to withstand retort conditions commonly employed in food packaging. In addition to corrosion protection, coatings for food and beverage containers should be non-toxic, and should not adversely affect the taste of the food or beverage in the can. Resistance to "popping", "blushing" and/or "blistering" may also be desired.

To achieve the necessary coating properties, the coatings are thermosetting in nature, that is, the coating composition is based on a resinous binder that contains a polymeric material that contains active hydrogens, for example, a (meth)acrylic polymer or a polyester, each of which contain hydroxyl groups, and a curing agent that is reactive with the active hydrogens to form a crosslinked or thermoset coating. The curing agent of choice is a phenol-formaldehyde or an amine such as melamine, benzoguanamine or urea-formaldehyde condensate. Unfortunately, such curing agents release formaldehyde during the curing or crosslinking reaction.

This formaldehyde can be a strong irritant when allowed to accumulate in an enclosed space such as, for example, a curing oven. It is also suspected of being hazardous to the health of humans when allowed to accumulate to abnormally high levels in the ambient atmosphere. It is, therefore, desirable to eliminate formaldehyde emissions during the curing operation.

Bisphenol A ("BPA") contributes to many of the properties desired in packaging coating products. The use of BPA and related products such as bisphenol A diglycidyl ether ("BADGE"), however, has recently come under scrutiny in the packaging industry. Substantially BPA-free coatings having properties comparable to coatings comprising BPA are therefore desired. The packaging industry is also interested in eliminating or minimizing other monomers, such as styrene that if present as an unreacted monomer is considered by the food and beverage industry as being toxic, and components, such as formaldehyde that is generated during the curing of the coating, in coatings. WO 2016/105502 A1 was published on June 30, 2016 and relates to a method of forming a coating on a food or beverage container, which includes spraying a coating composition onto an interior surface of the food or beverage container, where the coating composition includes an emulsion-polymerized latex copolymer having copolymer chains of one or more ethylenically-unsaturated monomers and one or more styrene offset monomers. Preferably, the coating composition is substantially free of BPA, PVC, and styrene. The method may also include curing the sprayed coating composition, thereby providing the coating on the interior surface of the food or beverage container. WO 2015/002958 A1 is directed to latex emulsion coating compositions, such as for forming coatings for food and beverage containers, as well as other packaging articles. WO 2006/045017 A1 is directed to a coating composition for a food or beverage can that includes an emulsion polymerized latex polymer formed by combining an ethylenically unsaturated monomer component with an aqueous dispersion of a salt of an acid-or anhydride-functional polymer and an amine, preferably, a tertiary amine. WO 2005/059208 A1 relates to a process for preparing a coated metal sheet coil comprising the coating of the metal sheet with a curable composition comprising an (meth)acrylated oligomer which is the reaction product of a carboxyl functionalized polybutadiene comprising x equivalents of -COOH groups with (i) y equivalents of one or more (meth)acrylated monoepoxides or (ii) a mixture of z equivalents of one or more polyepoxides and at least (z - x) equivalents of an α, β-unsaturated carboxylic acid ; with z > x and y >x.

### SUMMARY OF THE INVENTION

The present invention provides a package with a curable coating composition deposited on at least a portion thereof wherein the coating composition comprises:
(a) a latex polymer having reactive functional groups comprising the emulsion polymerization product of
   (i) an emulsion monomer component comprising at least one ethylenically unsaturated monomer polymerized in the presence of
   (ii) a polar polyolefin;
(b) a curing agent reactive with the functional groups of (a), which does not generate formaldehyde on curing.

The present invention also provides a method comprising:
(a) applying the coating composition described above to a substrate prior to or after forming the substrate into a package; and
(b) heating the coated substrate to a temperature and for a time sufficient to cure the coating composition.

### DETAILED DESCRIPTION OF THE INVENTION

As used herein, the term "crosslinker" or "curing agent" refers to a molecule capable of forming a covalent linkage between polymers or between two different regions of the same polymer.

The term "dispersed in aqueous medium" means that a polymer or the resinous components of the coating composition used in the practice of the invention can be mixed into aqueous medium to form a stable mixture, that is, the mixture does not separate into immiscible layers within an hour after mixing.

The term "aqueous medium" means water or a mixture of water and organic solvent.

The term "resinous components" means the polymers, crosslinkers and non-volatile organic components of the coating composition that may be used in the practice of the invention.

The term "resin solids" means the non-volatile organic components of the coating composition.

The term "acid" includes acid salts.

The term "food-contacting surface" refers to the surface of a container such as an inner surface of a food or beverage container that is in contact with, or intended for contact with, a food or beverage product. By way of example, an interior surface of a metal substrate of a food or beverage container, or a portion thereof such as a can end or a can body, is a food-contacting surface even if the interior metal surface is coated with a coating composition.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (e.g., polymers of two or more different monomers) and oligomers. Resin is used simultaneously with polymer.

Acrylic and methacrylic monomers and polymers are designated as (meth)acrylic monomers and polymers.

Molecular weights are on a number average or weight average basis as indicated and are determined by gel permeation chromatography using tetrahydrofuran as a solvent and using polystyrene standards.

As used herein, unless otherwise expressly specified, all numbers such as those expressing values, ranges, amounts or percentages may be read as if prefaced by the word "about", even if the term does not expressly appear. Singular encompasses plural and vice versa. For example, although reference is made herein to "a" polymeric surfactant, "an" emulsion polymerized latex or "an" emulsion polymerized latex polymer, "a" latex, "a" latex polymer, "an" emulsion monomer, one or more of each of these and any other components can be used. "Including", "for example", "such as" and like terms means including, for example, such as, but not limited to.

The term "emulsion monomer component" means one or more polymerizable ethylenically unsaturated monomer(s) using emulsion polymerization techniques.

The term "emulsion polymerization" means free radical polymerization of ethylenically unsaturated monomer(s) and surfactant dispersed in aqueous medium.

The term "latex" or "latex polymer" means the polymer resulting from emulsion polymerization.

The emulsion monomer component comprises at least one polymerizable ethylenically unsaturated monomer. The emulsion monomer component can be free of styrene and/or epoxy group-containing ethylenically unsaturated monomers.

The emulsion monomer component can be a mixture of monomers and/or oligomers that are capable of free radical initiated polymerization in aqueous medium.

Suitable ethylenically unsaturated monomers and/or oligomers for inclusion in the ethylenically unsaturated monomer component include, for example, ethylenically unsaturated alkyl (meth)acrylates, epoxy-containing ethylenically unsaturated monomers and various vinyl monomers. Examples of ethylenically unsaturated acid are acrylic and methacrylic acid. If used, they are typically present in amounts of up to 10, such as 3 to 8 percent by weight based on weight of the emulsion monomer component.

Suitable alkyl(meth)acrylates include, but are not limited to, methyl (meth)acrylate, ethyl(meth)acrylate, propyl(meth)acrylate, isopropyl (meth)acrylate, butyl(meth)acrylate, isobutyl(meth)acrylate, pentyl(meth)acrylate, isoamyl(meth)acrylate, hexyl(meth)acrylate, 2-ethylhexyl(meth)acrylate, cyclohexyl(meth)acrylate, decyl(meth)acrylate, isodecyl(meth)acrylate, benzyl (meth)acrylate, lauryl(meth)acrylate, isobornyl(meth)acrylate, octyl(meth)acrylate and nonyl(meth)acrylate.

The alkyl (meth)acrylates are typically present in amounts of up to 100, such as 20 to 80 percent by weight based on weight of the emulsion monomer component.

Hydroxyalkyl (meth)acrylates can also be used. Examples include hydroxyethyl acrylate (HEA), hydroxyethyl methacrylate (HEMA) and hydroxypropyl(meth)acrylate (HPMA).

The hydroxyalkyl (meth)acrylates are typically present in amounts of up to 30 percent, such as 3 to 15 percent by weight based on weight of the emulsion monomer component.

Difunctional (meth)acrylate monomers may be used in the monomer mixture as well. Examples include ethylene glycol di(meth)acrylate, 1,6-hexanediol di(meth)acrylate, allyl methacrylate, and the like. If present, the difunctional (meth)acrylate monomers are present in amounts of up to 5 percent, such as 0.1 to 2 percent by weight based on weight of the emulsion monomer component.

Also, epoxy-containing ethylenically unsaturated monomers such as glycidyl (meth)acrylate can be present in the ethylenically unsaturated monomer component. If present, it is present in amounts of up to 30, such as 1 to 20 percent by weight based on weight of the ethylenically unsaturated monomer component.

Suitable vinyl monomers include vinyl aromatic monomers, styrene, methyl styrene, alpha-methylstyrene, halostyrene, vinyl toluene, vinyl naphthalene, and mixtures thereof. The ethylenically unsaturated monomer component may be free of styrene monomers. Other vinyl monomers include vinyl ester, vinyl acetate, vinyl propionate, vinyl butyrate and vinyl stearate. The vinyl monomers, if used, are typically present in amounts of up to 70 percent, such as 10 to 60 percent by weight based on total weight of the emulsion monomer component.

Other suitable polymerizable ethylenically unsaturated monomers include acrylonitrile, acrylamide, methacrylamide, methacrylonitrile, conjugated butadiene and isoprene, and mixtures thereof, and which may be present in amounts of up to 30, such as 0 to 20 percent by weight based on total weight of the emulsion monomer component.

The emulsion monomer component can be present in amounts of 50 to 95, such as 60 to 90 percent by weight based on weight of the ethylenically unsaturated monomer component and resin solids weight of the polar polyolefin.

The emulsion monomer component is polymerized in the presence of a polyolefin polymer functionalized with a polar group such as an acid group, such as polypropylene or polyethylene homopolymer or copolymer in which the polymer has been modified with carboxylic acid.

Exemplary polyolefins include, but are not limited to, one or more thermoplastic polyolefin homopolymers or copolymers of one or more alpha-olefins such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer. Such exemplary polyolefins may have a molecular weight of greater than 800 grams/mole; for example, greater than 5,000 grams/mole; or in the alternative, greater than 50,000 grams/mole.

The polymers mentioned above comprise a polar group as either a comonomer or grafted monomer. Exemplary polar polyolefins include, but are not limited to, maleic anhydride grafted polyethylene homopolymer or copolymer, maleic anhydride grafted polypropylene homopolymer or copolymer, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from ExxonMobil Chemical Company and described in U.S. Pat. Nos. 4,599,392; 4,988,781 and 5,938,437.

The polar polyolefin polymer such as an ethylene-acrylic acid (EAA) or ethylene-methacrylic acid copolymer is believed to function as a surfactant stabilizing the ethylenically unsaturated monomer component before and during polymerization. The polar polyolefin is typically at least partially neutralized with a base such as ammonia or an organic amine.

Besides the polar polyolefin, an additional surfactant may be used in combination with the polar polyolefin. Examples of such surfactants are anionic surfactants. Examples of anionic surfactants include alkali metal and ammonium salts of long chain alkyl sulfates, sulfonates and sulfosuccinates; alkali metal and ammonium phosphate esters and alkali metal and ammonium alkyl phenoxy polyethoxysulfates, sulfonates or phosphates in which the alkyl group contains 4 to 18 carbon atoms and the oxyethylene units range from 6 to 60. Examples of specific anionic surfactants include sodium lauryl sulfate, sodium cetyl sulfate, sodium dioctyl sulfosuccinate and ammonium nonyl phenoxy (polyethox_{y})₆₋₆₀ sulfonate. When used, the additional surfactant is present in the coating composition in amounts of 0.1 to 5.0, such as 0.5 to 3.0 percent by weight based on resin solids weight of the polar polyolefin and the weight of the emulsion monomer component.

The polar polyolefin provides enhanced flexibility to the cured coating, which is particularly desirable in coatings for the interior of beer and other beverage containers and for metal can ends and for can bodies that are formed by a deep drawing process. The polar polyolefins are typically used in amounts of 5 to 50, such as 10 to 40 percent by weight based on weight of the emulsion monomer component and resin solids weight of the polar polyolefin.

The emulsion polymerized latex of the present invention can be prepared according to methods known in the art. For example, the ethylenically unsaturated monomer component can be emulsified with the polar polyolefin in aqueous medium and the emulsion fed into pre-heated aqueous medium with an initiator.

With regard to the conditions of the emulsion polymerization, the ethylenically unsaturated monomer component can be polymerized in aqueous medium with a water-soluble free radical initiator in the presence of the polar polyolefin.

The temperature of polymerization is typically from 0°C. to 100°C., such as 70°C. to 90°C. The pH of the aqueous medium is usually maintained at a pH of 5 to 12.

The free radical initiator can be selected from one or more water-soluble peroxides which are known to act as free radical initiators. Examples include hydrogen peroxide and t-butyl hydroperoxide. Redox initiator systems well known in the art (e.g., t-butyl hydroperoxide, erythorbic acid, and ferrous complexes) can also be employed. Persulfate initiators such as ammonium persulfate or potassium persulfate can be used but may lead to poor water resistance properties of the cured coating.

Further examples of polymerization initiators which can be employed include polymerization initiators which thermally decompose at the polymerization temperature to generate free radicals. Examples include both water-soluble and water-insoluble species. Further examples of free radical initiators that can be used include persulfates, such as ammonium or alkali metal (potassium, sodium or lithium) persulfate; azo compounds such as 2,2'-azo-bis(isobutyronitrile), 2,2'-azo-bis(2,4-dimethylvaleronitrile), and 1-t-butyl-azocyanocyclohexane; hydroperoxides such as t-butyl hydroperoxide, hydrogen peroxide, t-amyl hydroperoxide, methyl hydroperoxide, and cumene hydroperoxide; peroxides such as benzoyl peroxide, caprylyl peroxide, di-t-butyl peroxide, ethyl 3,3'-di(t-butylperoxy) butyrate, ethyl 3,3'-di(t- amylperoxy) butyrate, t-amylperoxy-2-ethyl hexanoate, and t-butylperoxy pivilate; peresters such as t- butyl peracetate, t-butyl perphthalate, and t-butyl perbenzoate; as well as percarbonates, such as di(1-cyano-1-methylethyl)peroxy dicarbonate; perphosphates, and the like; and combinations thereof.

Polymerization initiators can be used alone or as the oxidizing component of a redox system, which also may include a reducing component such as ascorbic acid, malic acid, glycolic acid, oxalic acid, lactic acid, thioglycolic acid, or an alkali metal sulfite, more specifically a hydrosulfite, hyposulfite or metabisulfite, such as sodium hydrosulfite, potassium hyposulfite and potassium metabisulfite, or sodium formaldehyde sulfoxylate, and combinations thereof.

The initiator and accelerator can be used in proportion from about 0.001% to 5% each, based on the weight of ethylenically unsaturated monomer component and resin solids weight of the polar polyolefin.

Chain transfer agents can be used to control polymer molecular weight, if desired.

The polymerization reaction of the ethylenically unsaturated monomer component in the presence of the polar polyolefin may be conducted as a batch, intermittent, or continuous operation. While all of the polymerization ingredients may be charged initially to the polymerization vessel, better results normally are obtained with proportioning techniques.

Typically, the reactor is charged with an appropriate amount of water, free radical initiator and optionally a portion of polar polyolefin. The reactor is then heated to the free radical initiation temperature and then charged with the emulsified ethylenically unsaturated monomer component. Only water, initiator, polar polyolefin, and some portion of the ethylenically unsaturated monomer component may be initially charged to the vessel. There may also be some water-miscible solvent present. After this initial charge is allowed to react for a period of time at polymerization temperature, the remaining emulsified ethylenically unsaturated monomer component can be added incrementally with the rate of addition being varied depending on the polymerization temperature, the particular initiator being employed, and the type and amount of monomers being polymerized. After all the monomer component has been charged, a final heating is carried out to complete the polymerization. The reactor is then cooled and the latex recovered.

The Mw of these particles as measured by gel permeation chromatography in tetrahydrofuran can be, for example, 50,000 or greater, such as 100,000 to 1,000,000 or less, such as 800,000 or less or 650,000 or less. The average Mw of these particles can range, for example, from 50,000 to 1,000,000, such as 100,000 to 800,000, such as 400,000 to 650,000. Higher Mw may increase flexibility and/or resistance of the film coating. Any values within these broad ranges are also within the scope of the present invention. Theoretical Tg values (Fox Equation) for the latex can be as low as -20°C. or greater, such as 5°C. to 100°C. or lower, such as 40°C. to 80°C.

The coating compositions used according to the present invention can comprise 50 to 98, such as 60 to 96 percent by weight of the latex polymer based on the total resin solids weight of the coating composition.

It has been discovered that coating compositions using the aforementioned latexes that contain reactive functional groups such as hydroxyl and carboxylic acid may be formulated using one or more optional curing agents (i.e., crosslinking resins, sometimes referred to as "crosslinkers") that do not generate formaldehyde on curing. The choice of particular crosslinker typically depends on the reactive functional group of the latex polymer and particular product being formulated.

Examples of suitable crosslinkers include hydroxyalkylamide materials, hydroxyalkylurea materials, polyoxazolines and polycarbodiimides. Hydroxyalkylamides are typically of the structure: 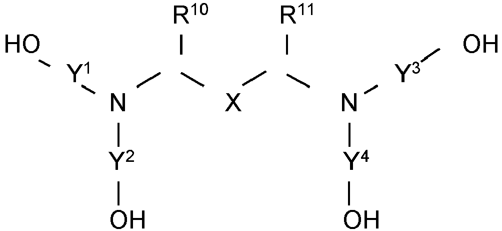
wherein R¹⁰ and R¹¹ each, independently, represent an electron withdrawing group, such as carbonyl;
Y¹, Y², Y³ and Y⁴ each, independently, represent a C₁ to C₃ alkylene group; and
X represents a C₂ to C₆ alkylene group.

Suitably, each of Y¹, Y², Y³ and Y⁴ represent an ethylene group.

Suitably, X represents a butylene group.

The crosslinker material may comprise a commercially available beta-hydroxyalkylamide crosslinker, such as, for example, PRIMID XL-552, i.e., N,N,N',N'-tetrakis(2-hydroxypropyl)adipamide, and PRIMID QM-1260 (available from EMS Chemie).

The crosslinker material may comprise a hydroxyalkylurea material. Suitable hydroxyalkylureas are those of the structure: 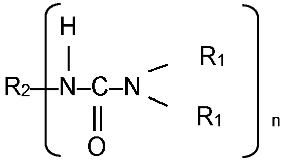 wherein R₂ is a substituted or unsubstituted C₁ to C₃₆ alkyl group, an aromatic group, the residue of an isocyanurate, biuret, allophanate, glycoluril, benzoguanamine and/or polyether amine; wherein each R₁ is independently a hydrogen, an alkyl having at least 1 carbon atom, or a hydroxy functional alkyl having 2 or more carbon atoms and at least one R₁ is hydroxyalkyl having 2 or more carbon atoms; and n is 2 to 6.

The level of curing agent (i.e., crosslinker) required will depend on the type of curing agent, the time and temperature of the bake, and the molecular weight of the polymer. If used, the crosslinker is typically present in amounts of 2 to 50, such as 4 to 40 percent by weight. These weight percentages are based upon the total weight of the resin solids in the coating composition.

A coating composition of the present invention may also include other optional polymers that do not adversely affect the coating composition or a cured coating composition resulting therefrom. Such optional polymers are typically included in a coating composition as a filler material, although they can be included to provide desirable properties. One or more optional polymers can be included in a sufficient amount to serve an intended purpose, but not in such an amount to adversely affect a coating composition or a cured coating composition resulting therefrom.

Such additional polymeric materials can be non-reactive, and hence, simply function as fillers. Such optional non-reactive filler polymers include, for example, polyesters, acrylics, and polyethers. Alternatively, such additional polymeric materials can be reactive with other components of the composition (e.g., the curing agent). If desired, reactive polymers can be incorporated into the compositions of the present invention, to provide additional functionality for various purposes, such as crosslinking. Examples of such reactive polymers include, for example, hydroxyl-functional polyesters and acrylic polymers. If present, these additional polymeric materials are present in amounts up to 20 percent by weight based on weight of resin solids of the coating composition.

A coating composition of the present invention may also include other optional ingredients that do not adversely affect the coating composition or a cured coating composition resulting therefrom. Such optional ingredients are typically included in a coating composition to enhance composition esthetics, to facilitate manufacturing, processing, handling, and application of the composition, and to further improve a particular functional property of a coating composition or a cured coating composition resulting therefrom.

Such optional ingredients include, for example, catalysts such as tin compounds, lubricants such as a polyolefin wax, anticorrosion agents such as aluminum and zinc, flow control agents such as oxyalkylated acetylenic polyols, thickening agents such as hydroxyethyl cellulose, dispersing agents, antioxidants, adhesion promoters, light stabilizers, and mixtures thereof. Each optional ingredient is included in a sufficient amount that will not adversely affect a coating composition or a cured coating composition resulting therefrom. If present, these optional ingredients are present in amounts up to 10 percent by weight based on weight of resin solids of the coating composition.

As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention. Suitable colorants are listed in U.S. Patent No. 8,614,286, column 7, line 2 through column 8, line 65, which is incorporated by reference herein. Particularly suitable for packaging coatings are those approved for food contact, such as titanium dioxide; iron oxides, such as black iron oxide; carbon black; ultramarine blue; phthalocyanines, such as phthalocyanine blue and phthalocyanine green; chromium oxides, such as chromium green oxide; graphite fibrils; ferried yellow; quindo red; and combinations thereof, and those listed in Article 178.3297 of the Code of Federal Regulations, which is incorporated by reference herein.

In general, the colorant can be present in any amount sufficient to impart the desired visual and/or color effect. The colorant may comprise from 1 to 65 weight percent of the coatings in the present invention, such as from 3 to 40 weight percent or 5 to 35 weight percent, with weight percent based on the total weight of the coating composition.

The compositions used in the practice of the invention are substantially free, may be essentially free and may be completely free of bisphenol A and derivatives or residues thereof, including bisphenol A ("BPA") and bisphenol A diglycidyl ether ("BADGE"). Such compositions are sometimes referred to as "BPA non intent" because BPA, including derivatives or residues thereof are not intentionally added but may be present in trace amounts because of unavoidable contamination from the environment. The compositions can also be substantially free and may be essentially free and may be completely free of Bisphenol F and derivatives or residues thereof, including bisphenol F and bisphenol F diglycidyl ether ("BPFG"). The term "substantially free" as used in this context means the compositions contain less than 1000 parts per million (ppm), "essentially free" means less than 100 ppm and "completely free" means less than 20 parts per billion (ppb) of any of the above mentioned compounds, derivatives or residues thereof.

As previously discussed, the coating composition of the invention can include water and may further include one or more optional organic solvents. Typically, the coating composition includes up to 40, such as 10 to 40 percent by weight organic solvent based on total weight of organic solvent and water.

The coating composition typically has a total solids content of from about 10 to about 70, such as about 20 to about 50 percent by weight based on weight of the coating composition.

Specifically, the coating composition has a resin solids content of 5 to 65, such as 15 to 45 percent by weight, the percentage by weight being based on total weight of the coating composition.

The coatings described herein are particularly suitable for use as a packaging coating. The application of various pretreatments and coatings to packaging is well established. Such treatments and/or coatings, for example, can be used in the case of metal cans, wherein the treatment and/or coating may be used, for example, to retard or inhibit corrosion, provide a decorative coating, provide ease of handling during the manufacturing process, and the like. Coatings can be applied to the interior of such cans to prevent the contents from contacting the metal of the container. Contact between the metal and a food or beverage, for example, can lead to corrosion of a metal container, which can then contaminate the food or beverage. This is particularly true when the contents of the can are acidic in nature. The coatings applied to the interior of metal cans also help prevent corrosion in the headspace of the cans, which is the area between the fill line of the product and the can lid; corrosion in the headspace is particularly problematic with food products having a high salt content. Coatings can also be applied to the exterior of metal cans. Certain coatings of the present invention are particularly applicable for use with coiled metal stock, such as the coiled metal stock from which the ends of cans are made ("can end stock"), and end caps and closures are made ("cap/closure stock"). Since coatings designed for use on can end stock and cap/closure stock are typically applied prior to the piece being cut and stamped out of the coiled metal stock, they are typically flexible and extensible. For example, such stock is typically coated on both sides. Thereafter, the coated metal stock is punched. For can ends, the metal is then scored for the "pop-top" opening and the pop-top ring is then attached with a pin that is separately fabricated. The end is then attached to the can body by an edge rolling process. A similar procedure is done for "easy open" can ends. For easy open can ends, a score substantially around the perimeter of the lid allows for easy opening or removing of the lid from the can, typically by means of a pull tab. For caps and closures, the cap/closure stock is typically coated, such as by roll coating, and the cap or closure stamped out of the stock; it is possible, however, to coat the cap/closure after formation. Coatings for cans subjected to relatively stringent temperature and/or pressure requirements may desirably also be resistant to cracking, popping, corrosion, blushing and/or blistering.

Accordingly, the present invention is directed to a package coated at least in part with any of the coating compositions described above. A "package" is anything used to contain another item, particularly for shipping from a point of manufacture to a consumer, and for subsequent storage by a consumer. A package will be therefore understood as something that is sealed so as to keep its contents free from deterioration until opened by a consumer. The manufacturer will often identify the length of time during which the food or beverage will be free from spoilage, which typically ranges from several months to years. Thus, the present "package" is distinguished from a storage container or bakeware in which a consumer might make and/or store food; such a container would only maintain the freshness or integrity of the food item for a relatively short period. A package according to the present invention can be made of metal or non-metal, for example, plastic or laminate, and be in any form. An example of a suitable package is a laminate tube. Another example of a suitable package is metal can. The term "metal can" includes any type of metal can, container or any type of receptacle or portion thereof that is sealed by the food/beverage manufacturer to minimize or eliminate spoilage of the contents until such package is opened by the consumer. One example of a metal can is a food can; the term "food can(s)" is used herein to refer to cans, containers or any type of receptacle or portion thereof used to hold any type of food and/or beverage. The term "metal can(s)" specifically includes food cans and also specifically includes "can ends" including "E-Z open ends", which are typically stamped from can end stock and used in conjunction with the packaging of food and beverages. The term "metal cans" also specifically includes metal caps and/or closures such as bottle caps, screw top caps and lids of any size, lug caps, and the like. The metal cans can be used to hold other items as well, including, but not limited to, personal care products, bug spray, spray paint, and any other compound suitable for packaging in an aerosol can. The cans can include "two-piece cans" and "three-piece cans" as well as drawn and ironed one-piece cans; such one-piece cans often find application with aerosol products. Packages coated according to the present invention can also include plastic bottles, plastic tubes, laminates and flexible packaging, such as those made from PE, PP, PET and the like. Such packaging could hold, for example, food, toothpaste, personal care products and the like.

The coating can be applied to the interior and/or the exterior of the package. For example, the coating can be rollcoated onto metal used to make a two-piece food can, a three-piece food can, can end stock and/or cap/closure stock. The coating can be applied to a coil or sheet by roll coating; the coating is then cured by heating or radiation and can ends are stamped out and fabricated into the finished product, i.e. can ends. The coating can be applied as a rim coat to the bottom of the can; such application can be by roll coating. The rim coat functions to reduce friction for improved handling during the continued fabrication and/or processing of the can. The coating can be applied to caps and/or closures; such application can include, for example, a protective varnish that is applied before and/or after formation of the cap/closure and/or a pigmented enamel post applied to the cap, particularly those having a scored seam at the bottom of the cap. Decorated can stock can also be partially coated externally with the coating described herein, and the decorated, coated can stock used to form various metal cans. This is within the scope of the "package" according to the present invention.

The packages of the present invention can be coated with any of the compositions described above by any means known in the art, such as spraying, roll coating, dipping, flow coating and the like; the coating may also be applied by electrocoating when the substrate is conductive. The appropriate means of application can be determined by one skilled in the art based upon the type of package being coated and the type of function for which the coating is being used. The coatings described above can be applied over the substrate as a single layer or as multiple layers with multiple heating stages between the application of each layer, if desired. After application to the substrate, the coating composition may be cured by any appropriate means.

The coatings described herein can be applied to any packaging substrates, which can be metallic or non-metallic. Metallic substrates include tin, steel, tin-plated steel, chromium passivated steel, galvanized steel, aluminum, aluminum foil, coiled steel or other coiled metal. Non-metallic substrates including polymeric, plastic, polyester, polyolefin, polyamide, cellulosic, polystyrene, polyacrylic, poly(ethylene naphthalate), polypropylene, polyethylene, nylon, EVOH, polylactic acid, other "green" polymeric substrates, poly(ethyleneterephthalate) ("PET"), polycarbonate, polycarbonate acrylobutadiene styrene ("PC/ABS"), polyamide, glass, paper, cardboard, textiles, leather, both synthetic and natural, and the like. The substrate can be one that has been already treated in some manner, such as to impart visual and/or color effect.

The coatings can be applied to a dry film thickness of 0.04 mils or greater, such as 0.1 mil to 4 mils, such as 9.7 to 2 mils The coatings of the present invention can be used alone, or in combination with one or more other coatings. For example, the coatings of the present invention can comprise a colorant or not and can be used as a primer, basecoat, and/or top coat. For substrates coated with multiple coatings, one or more of those coatings can be coatings as described herein. For example, a coating such as described herein can be spray applied as a top coat over a roller applied basecoat of a different composition for improvements in organoleptic performance.

### EXAMPLES

The following examples illustrate the present invention but are not intended to limit the scope thereof.

Example 1 shows the dispersion of a polar polyolefin. Example 2 shows the latex synthesis in which an ethylenically unsaturated monomer component is polymerized in the presence of the dispersion of Example 1.

Examples A, B and C show formulated coating compositions in which the latex of Example 2 is combined with two formaldehyde-free crosslinkers, a hydroxyalkylamide (Example A) and a hydroxyalkylurea (Example B), and for the purpose of comparison, a phenol formaldehyde crosslinker (Example C). The formulations are summarized in Table I below. The formulations were drawn down on the inside of an aluminum beverage can body with a #10 draw bar, cured in an oven at 380°F. (193°C.) for 3 minutes, and evaluated for blush and adhesion as reported in Table II below.

### Example 1: Soap Dispersion

A three-liter round bottom, four-necked flask equipped with an agitator, a nitrogen inlet tube, a thermometer, and a reflux condenser was charged with 250.60 parts of a polar polyolefin available from the Dow Chemical Company as PRIMACOR 5980i, 940.40 parts of deionized water, and 62 parts of dimethylethanolamine. The flask was heated gradually to 90°C., and was held at 90°C. for 5 hours until the polar polyolefin was completely dissolved. The batch was to achieve 100% total neutralization and 20% NV.

### Example 2: Latex Synthesis

A three-liter round bottom, four-necked flask equipped with an agitator, a nitrogen inlet tube, a thermometer, and a reflux condenser was charged with 278.83 parts of Example 1 soap dispersion, 191.81 parts of deionized water, and 2.76 parts of dimethylethanolamine. The flask was heated gradually to 70°C. During the heat up, the initiator solution and monomer mixture were prepared. The initiator solution was made by mixing 1.69 parts of hydrogen peroxide 35% aqueous solution and 10.14 parts of deionized water. The monomer mixture was made with mixing 3.84 parts of glycidyl methacrylate, 58.81 parts of ethyl acrylate, 58.81 parts of methyl methacrylate, 6.39 parts of hydroxyethyl methacrylate, and 1.69 parts of benzoin. Once the batch reached 70°C., 74.14% of initiator solution was pumped into the flask over 125 minutes. Five minutes into the initiator charge, the monomer mixture was pumped into the flask over 120 minutes. The batch temperature was kept at 70°C. during the addition. When both initiator and monomer addition were finished, batch was held for 10 minutes and 4.45 parts of deionized water was added to rinse monomer pump line. After the hold, 12.93% of initiator solution was charged over 20 minutes to consume free monomers. A 30 minutes hold was conducted afterwards. Then the rest 12.93% of initiator solution was charged over 20 minutes to consume the remaining free monomers. Once initiator was all added, 0.41 parts of deionized water was added to rinse initiator pump line and the batch was held at 70°C. for 1 hour to finish the batch. This batch yielded a polymer dispersion with 28.60% NV, and a viscosity of 52 centipoise.

**Table I**

| Coating Formulation | | | | | | |
|---|---|---|---|---|---|---|
| Example | Latex | Hydroxyalkylamide¹ | Hydroxyalkylurea² | Phenol Formaldehyde Resin³ | Deionized Water | Total (g) |
| A | 100 g | 0.6 g | | | 20 g | 120.6 |
| B | 100 g | | 2 g | | 20 g | 122.0 |
| C | 100 g | | | 0.8 g | 20 g | 120.8 |

| | | | | | | |
|---|---|---|---|---|---|---|
| ¹ PRIMID XL-552 from EMS Chemie. ² 30% solids solution in 1-methoxy-2-propanol of 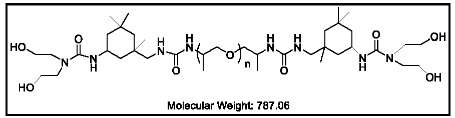 ³ HRJ-13078 from SI Group. | | | | | | |

**Table II**

| Resistance Properties | | | | |
|---|---|---|---|---|
| Example | | A | B | C |
| MEK Rubs | | 10 | 8 | 10 |
| 1% Joy | Blush | 8 | 8 | 8 |
| | Adhesion (%) | 100 | 100 | 100 |
| 3% Acetic Acid | Blush | 7 | 7 | 7 |
| | Adhesion (%) | 100 | 100 | 100 |

### Test Methods

The following test methods were utilized in Examples A, B and C.
A. MEK Double Rubs: The coated substrate was manually rubbed in a back and forth motion using a clean cheesecloth soaked in methyl ethyl ketone. The number of double rubs (back and forth motion) to failure was recorded. Failure occurs when the coating is broken through to reveal the underlying substrate.
B. Blush Resistance: Blush resistance measures the ability of a coating to resist attack by various testing solutions. When the coated film absorbs test solution, it generally becomes cloudy or looks white. Blush is measured visually using a scale of 1-10 where a rating of "10" indicates no blush and a rating of "0" indicates complete whitening of the film. Blush ratings of at least 7 are typically desired for commercially viable coatings. The coated panel tested is 2 x 4 inches (5 x 10 cm) and the testing solution covers half of the panel being tested so you can compare blush of the exposed panel to the unexposed portion.
C. Adhesion: Adhesion testing is performed to assess whether the coating adheres to the substrate. The adhesion test is performed according to ASTM D 3359-Test Method B, using Scotch 610 tape, available from 3M Company of Saint Paul, Minn. Adhesion is generally rated on a scale of 0-10 where a rating of "10" indicates no adhesion failure, a rating of "9" indicates 90% of the coating remains adhered, a rating of "8" indicates 80% of the coating remains adhered, and so on.
D. Joy Detergent Test: The "Joy" test is designed to measure the resistance of a coating to a hot 180°F. (82°C.) Joy detergent solution. The solution is prepared by mixing 30 grams of Ultra Joy Dishwashing Liquid (product of Procter & Gamble) into 3000 grams of deionized water. Coated strips are immersed into the 180°F. (82°C.) Joy solution for 15 minutes. The strips are then rinsed and cooled in deionized water, dried, and immediately rated for blush and adhesion as described previously.
E. Acetic Acid Test: The "Acetic Acid" test is designed to measure the resistance of a coating to a boiling 3% acetic acid solution. The solution is prepared by mixing 90 grams of Glacial Acetic Acid (product of Fisher Scientific) into 3000 grams of deionized water. Coated strips are immersed into the boiling Acetic Acid solution for 30 minutes. The strips are then rinsed and cooled in deionized water, dried, and immediately rated for blush and adhesion as described previously.

Whereas particular embodiments of this invention have been described above for purposes of illustration, it will be evident to those skilled in the art that numerous variations of the details of the present invention may be made without departing from the invention as defined in the appended claims.

Although various embodiments of the invention have been described in terms of "comprising", embodiments consisting essentially of or consisting of are also within the scope of the present invention.

## Claims

1. A package with a curable coating composition deposited on at least a portion thereof wherein the coating composition comprises:
(a) a latex polymer having reactive functional groups comprising the emulsion polymerization product of
(i) an emulsion monomer component comprising at least one ethylenically unsaturated monomer polymerized in the presence of
(ii) a polar polyolefin;
(b) a curing agent reactive with the functional groups of (a), which does not generate formaldehyde on curing.

2. The package of claim 1 in which the emulsion monomer component comprises a mixture of polymerizable ethylenically unsaturated monomers.

3. The package of any of the preceding claims in which the emulsion monomer component comprises ethylenically unsaturated monomers selected from alkyl (meth)acrylates, hydroxyalkyl (meth)acrylates and epoxy group-containing ethylenically unsaturated monomers and combinations thereof.

4. The package of any of the preceding claims in which the polar polyolefin is a polyolefin polymer functionalized with an acid group.

5. The package of any of the preceding claims in which the acid group is a carboxylic acid group.

6. The package of any of the preceding claims in which the polar polyolefin is an ethylene (meth)acrylic acid copolymer.

7. The package of any of the preceding claims in which the ethylenically unsaturated monomer component is present in amounts of 50 to 95 percent by weight based on weight of (i) and resin solids weight of (ii).

8. The package of any of the preceding claims in which the polar polyolefin is present in amounts of 5 to 50 percent by weight based on weight of (i) and resin solids weight of (ii).

9. The package of any of the preceding claims in which (a) is present in the coating composition in amounts of 50 to 98 percent by weight based on weight of resin solids.

10. The package of any of the preceding claims in which (b) is present in the coating composition in amounts of 2 to 50 percent by weight based on weight of resin solids.

11. The package of any of the preceding claims in which the polymerizable ethylenically unsaturated monomers are free of styrene.

12. The package of any of the preceding claims in which the coating composition is substantially free of bisphenol A and bisphenol A diglycidyl ether (BADGE).

13. The package of any of the preceding claims in which the curing agent is a hydroxyalkylamide.

14. The package of any of the preceding claims which is a metal can, preferably a food or beverage can.

15. A method comprising:
(a) applying a coating composition as defined in any of claims 1-14 to a substrate prior to or after forming the substrate into a package; and
(b) heating the coated substrate to a temperature and for a time sufficient to cure the coating composition,
wherein the package is preferably a metal can, more preferably a food or beverage can.

## Patentansprüche

1. Eine Verpackung mit einer härtbaren Beschichtungszusammensetzung, die auf zumindest einem Teil davon aufgebracht ist, wobei die Beschichtungszusammensetzung:
(a) ein Latexpolymer mit reaktiven funktionellen Gruppen, umfassend das Emulsionspolymerisationsprodukt von
(i) einer Emulsionsmonomerkomponente, die mindestens ein ethylenisch ungesättigtes Monomer enthält, das polymerisiert wird in Gegenwart von
(ii) einem polaren Polyolefin,
(b) ein Härtungsmittel, das mit den funktionellen Gruppen von (a) reaktiv ist, und das beim Härten kein Formaldehyd generiert, enthält.

2. Die Verpackung gemäß Anspruch 1, in dem die Emulsionsmonomerkomponente eine Mischung von polymerisierbaren ethylenisch ungesättigten Monomeren enthält.

3. Die Verpackung gemäß einem der vorherigen Ansprüche, in denen die Emulsionsmonomerkomponente ethylenisch ungesättigte Monomere enthält, die aus Alkyl(meth)acrylaten, Hydroxyalkyl(meth)acrylaten und Epoxy-Gruppen-enthaltenden ethylenisch ungesättigten Monomeren und Kombinationen davon ausgewählt sind.

4. Die Verpackung gemäß einem der vorherigen Ansprüche, in denen das polare Polyolefin ein Polyolefinpolymer ist, welches mit einer Säuregruppe funktionalisiert ist.

5. Die Verpackung gemäß einem der vorherigen Ansprüche, in denen die Säuregruppe eine Carbonsäuregruppe ist.

6. Die Verpackung gemäß einem der vorherigen Ansprüche, in denen das polare Polyolefin ein Ethylen(meth)acrylsäure-Copolymer ist.

7. Die Verpackung gemäß einem der vorherigen Ansprüche, in denen die ethylenisch ungesättigte Monomerkomponente in Mengen von 50 bis 95 Gew.-% vorhanden ist, basierend auf dem Gewicht von (i) und dem Gewicht der Harzfeststoffe von (ii).

8. Die Verpackung gemäß einem der vorherigen Ansprüche, in denen das polare Polyolefin in Mengen von 5 bis 50 Gew.-% vorhanden ist, basierend auf dem Gewicht von (i) und dem Gewicht der Harzfeststoffe von (ii).

9. Die Verpackung gemäß einem der vorherigen Ansprüche, in denen (a) in Mengen von 50 bis 98 Gew.-% in der Beschichtungszusammensetzung vorhanden ist, basierend auf dem Gewicht der Harzfeststoffe.

10. Die Verpackung gemäß einem der vorherigen Ansprüche, in denen (b) in Mengen von 2 bis 50 Gew.-% in der Beschichtungszusammensetzung vorhanden ist, basierend auf dem Gewicht der Harzfeststoffe.

11. Die Verpackung gemäß einem der vorherigen Ansprüche, in denen die polymerisierbaren ethylenisch ungesättigten Monomere frei von Styrol sind.

12. Die Verpackung gemäß einem der vorherigen Ansprüche, in denen die Beschichtungszusammensetzung frei von Bisphenol A und Bisphenol-A-diglycidylether (BADGE) ist.

13. Die Verpackung gemäß einem der vorherigen Ansprüche, in denen das Härtungsmittel ein Hydroxyalkylamid ist.

14. Die Verpackung gemäß einem der vorherigen Ansprüche, wobei die Verpackung eine Metalldose, bevorzugt eine Lebensmittel- oder Getränkedose, ist.

15. Ein Verfahren, umfassend:
(a) Aufbringen einer Beschichtungszusammensetzung gemäß einem der Ansprüche 1-14 auf ein Substrat vor oder nach dem Formen des Substrats zu einer Verpackung, und
(b) Erhitzen des beschichteten Substrats auf eine Temperatur und für eine Zeit, die ausreichen, um die Beschichtungszusammensetzung zu härten,
wobei die Verpackung bevorzugt eine Metalldose, bevorzugter eine Lebensmittel- oder Getränkedose, ist.

## Revendications

1. Emballage portant une composition de revêtement durcissable déposée sur au moins une partie de l'emballage, laquelle composition de revêtement comprend :
a) un polymère latex porteur de groupes fonctionnels réactifs, comportant le produit de polymérisation en émulsion i)
d'un composant monomère d'émulsion comprenant au moins un monomère à insaturation éthylénique, polymérisé en présence
ii) d'une polyoléfine polaire,
b) et un agent durcisseur, qui peut réagir avec les groupes fonctionnels du composant (a) et qui ne produit pas de formaldéhyde lors du durcissement.

2. Emballage conforme à la revendication 1, dans lequel le composant monomère d'émulsion comprend un mélange de monomères polymérisables à insaturation éthylénique.

3. Emballage conforme à l'une des revendications précédentes, dans lequel le composant monomère d'émulsion comprend des monomères à insaturation éthylénique choisis parmi les acrylates et méthacrylates d'alkyle, les acrylates et méthacrylates d'hydroxy-alkyle, et les monomères à insaturation éthylénique porteurs de groupes époxy, ainsi que les combinaisons de tels monomères.

4. Emballage conforme à l'une des revendications précédentes, dans lequel la polyoléfine polaire est un polymère de type polyoléfine fonctionnalisée au moyen d'un groupe acide.

5. Emballage conforme à l'une des revendications précédentes, dans lequel le groupe acide est un groupe acide carboxylique.

6. Emballage conforme à l'une des revendications précédentes, dans lequel la polyoléfine polaire est un copolymère d'éthylène et d'acide acrylique ou méthacrylique.

7. Emballage conforme à l'une des revendications précédentes, dans lequel le composant monomère à insaturation éthylénique est présent en une proportion de 50 à 95 %, en poids rapporté au poids de l'ingrédient (i) et des solides de résine de l'ingrédient (ii).

8. Emballage conforme à l'une des revendications précédentes, dans lequel la polyoléfine polaire est présente en une proportion de 5 à 50 %, en poids rapporté au poids de l'ingrédient (i) et des solides de résine de l'ingrédient (ii).

9. Emballage conforme à l'une des revendications précédentes, dans lequel le composant (a) est présent dans la composition de revêtement en une proportion de 50 à 98 %, en poids rapporté au poids des solides de résine.

10. Emballage conforme à l'une des revendications précédentes, dans lequel le composant (b) est présent dans la composition de revêtement en une proportion de 2 à 50 %, en poids rapporté au poids des solides de résine.

11. Emballage conforme à l'une des revendications précédentes, dans lequel les monomères polymérisables à insaturation éthylénique ne contiennent pas de styrène.

12. Emballage conforme à l'une des revendications précédentes, dans lequel la composition de revêtement ne contient pratiquement pas de bisphénol A et d'éther diglycidylique de bisphénol A (BADGE).

13. Emballage conforme à l'une des revendications précédentes, dans lequel l'agent durcisseur est un hydroxyalkyl-amide.

14. Emballage conforme à l'une des revendications précédentes, qui est une boîte métallique, de préférence une boîte métallique pour aliment ou boisson.

15. Procédé comportant
a) l'application d'une composition de revêtement, définie dans l'une des revendications 1 à 14, sur un substrat, avant ou après façonnage de ce substrat en un emballage,
b) et le chauffage de ce substrat revêtu, à une température et pendant un laps de temps suffisants pour faire durcir la composition de revêtement,
étant entendu que l'emballage est de préférence une boîte métallique, et mieux encore, une boîte métallique pour aliment ou boisson.
